# EUROPÄISCHE PATENTSCHRIFT

(11) **EP 4 428 380 B1**
(45) Veröffentlichungstag und Bekanntmachung des Hinweises auf die Patenterteilung: **13.08.2025**
(21) Anmeldenummer: 24159139.5
(22) Anmeldetag: 22.02.2024
(51) Int. Cl.: F16B 25/00

(54) **SCHRAUBE, VERFAHREN ZUM HERSTELLEN EINER SCHRAUBE UND ANORDNUNG MIT EINER SCHRAUBE**
SCREW, METHOD FOR PRODUCING A SCREW AND ARRANGEMENT WITH A SCREW
VIS, PROCÉDÉ DE FABRICATION D'UNE VIS ET AGENCEMENT DOTÉ D'UNE VIS

(30) Priorität: 10.03.2023 DE 102023105964
(43) Veröffentlichungstag der Anmeldung: 11.09.2024
(73) Patentinhaber: Reisser Schraubentechnik GmbH, 74653 Ingelfingen-Criesbach (DE)
(72) Erfinder: Benz, Thomas, 74653 Ingelfingen-Criesbach (DE)
(74) Vertreter: Patentanwälte Ruff, Wilhelm, Beier, Dauster & Partner mbB

(56) Entgegenhaltungen:
- DE-A1- 102017 204 734
- US-A1- 2002 018 700

## Beschreibung

Die Erfindung betrifft eine Schraube zur Befestigung eines ersten Werkstücks an einem zweiten Werkstück, wobei mittels der Schraube das erste Werkstück im Abstand zu dem zweiten Werkstück gehalten werden kann, mit einem Schaft, einem Kopf mit einer Antriebsausbildung, einem ersten Gewinde im Bereich des Kopfes und/oder in einem unmittelbar an eine Unterseite des Kopfes anschließenden ersten Abschnitt des Schafts, einem zweiten Gewinde, wobei das zweite Gewinde in einem von einem freien Ende des Schafts ausgehenden zweiten Abschnitt des Schafts angeordnet ist, und einem Zwischenabstand zwischen dem ersten Abschnitt und dem zweiten Abschnitt des Schafts. Die Erfindung betrifft auch ein Verfahren zum Herstellen einer erfindungsgemäßen Schraube und eine Anordnung mit einer erfindungsgemäßen Schraube, einem ersten Werkstück und einem zweiten Werkstück.

Schrauben zur Befestigung eines ersten Werkstücks an einem zweiten Werkstück, wobei mittels der Schraube das erste Werkstück im Abstand zu dem zweiten Werkstück gehalten werden kann, werden beispielsweise zur Abstandsmontage von Fassaden eingesetzt. Solche Schrauben werden auch als Abstandsschrauben oder Distanzschrauben bezeichnet. Mit diesen Schrauben wird eine Unterkonstruktion, beispielsweise aus Aluminium oder Holz, im Abstand von einem Mauerwerk, allgemein im Abstand von einer Gebäudewand, gehalten. Die Unterkonstruktion aus Aluminium oder Holz dient dann zur Befestigung von Fassadenplatten, allgemein zur Befestigung einer Fassade. Zwischen der Unterkonstruktion und dem Mauerwerk wird Dämmmaterial angeordnet. Die Gebäudewand oder Teile hiervon können auch als erste Unterkonstruktion bezeichnet werden und eine zweite Unterkonstruktion dient dann zur Befestigung einer Fassade. Mit Abstandsschrauben oder Distanzschrauben kann dann die zweite Unterkonstruktion in einem Abstand von der ersten Unterkonstruktion an der ersten Unterkonstruktion befestigt werden. Solche bekannten Abstandsschrauben sind beispielsweise aus Edelstahl A4 gefertigt, um durch die geringe Wärmeleitfähigkeit des Edelstahls eine Wärmebrücke zwischen dem Mauerwerk und der Unterkonstruktion zu minimieren beziehungsweise einen Wärmeverlust über die Abstandsschraube zu minimieren. Eine Schraube zum Befestigen von Bauteilen in einem Abstand von einem Untergrund ist aus der DE 10 2017 204734 A1 bekannt.

Mit der Erfindung sollen eine Schraube, ein Verfahren zum Herstellen einer Schraube und eine Anordnung mit einer Schraube verbessert werden. Hierzu ist eine Schraube mit den Merkmalen von Anspruch 1, ein Verfahren zum Herstellen einer Schraube mit den Merkmalen von Anspruch 14 und eine Anordnung mit einer Schraube mit den Merkmalen von Anspruch 15 vorgesehen.

Vorteilhafte Weiterbildungen der Erfindung ergeben sich aus den Unteransprüchen.

Eine Schraube zur Befestigung eines ersten Werkstücks an einem zweiten Werkstück, wobei mittels der Schraube das erste Werkstück im Abstand zu dem zweiten Werkstück gehalten werden kann, weist einen Schaft, einen Kopf mit einer Antriebsausbildung, ein erstes Gewinde im Bereich des Kopfes und/oder in einem unmittelbar an eine Unterseite des Kopfes anschließenden ersten Abschnitt des Schafts, ein zweites Gewinde, wobei das zweite Gewinde in einem von einem freien Ende des Schafts ausgehenden zweiten Abschnitt des Schafts angeordnet ist, und einen Zwischenabschnitt zwischen dem ersten Abschnitt und dem zweiten Abschnitt des Schafts auf. Der erste Abschnitt und der zweite Abschnitt bestehen aus Vollmaterial und der Zwischenabschnitt ist mittels eines Rohres gebildet.

Indem der Zwischenabschnitt mittels eines Rohres gebildet ist, kann eine Wärmeleitfähigkeit im Zwischenabschnitt gegenüber Vollmaterial deutlich reduziert werden. Indem der erste Abschnitt und der zweite Abschnitt aus Vollmaterial bestehen, kann im ersten Abschnitt und im zweiten Abschnitt jeweils ein Gewinde angeordnet werden, um die Schraube im ersten Werkstück und im zweiten Werkstück sicher zu befestigen. Der Zwischenabschnitt kann dabei durch die Ausbildung als Rohr gegenüber mechanischen Belastungen, beispielsweise Torsion, Zug und Knickbelastung, ausreichend stabil ausgeführt werden. Wärmebrücken zwischen dem ersten Werkstück und dem zweiten Werkstück werden durch die geringe Wärmeleitfähigkeit des als Rohr ausgebildeten Zwischenabschnitts vermieden, indem die Wärmeleitfähigkeit des Zwischenabschnitts minimiert ist.

In Weiterbildung der Erfindung beträgt eine Wandstärke des Rohres maximal 20%, insbesondere zwischen 5% und 15%, insbesondere 10%, des Durchmessers des Rohres.

Auf diese Weise kann das Rohr mechanisch ausreichend stabil ausgeführt werden und die Wärmeleitfähigkeit des Zwischenabschnitts kann dadurch minimiert werden.

In Weiterbildung der Erfindung ist eine Verbindung zwischen dem Rohr im Zwischenabschnitt und dem Schaft im ersten Abschnitt mittels Schweißen, mittels Löten, mittels Klemm- oder Pressverbindung, mittels Nietverbindung und/oder mittels Clinchverbindung ausgeführt.

In Weiterbildung der Erfindung ist eine Verbindung zwischen dem Rohr im Zwischenabschnitt und dem Schaft im ersten Abschnitt und/oder dem Schaft im zweiten Abschnitt mittels einer Klemm- oder Pressverbindung ausgebildet, wobei die Klemm- oder Pressverbindung in und entgegen einer vorgesehenen Einschraubrichtung der Schraube einen Formschluss zwischen dem Rohr im Zwischenabschnitt und dem ersten Abschnitt beziehungsweise dem zweiten Abschnitt des Schafts ausbildet.

Mittels eines Formschlusses können auch hohe Drehmomente beim Einschrauben problemlos vom ersten Abschnitt, der den Kopf mit einer Antriebsausbildung aufweist, über den Zwischenabschnitt auf den zweiten Abschnitt, der mit einem zweiten Gewinde zum Einschrauben in das zweite Werkstück versehen ist, übertragen werden.

In Weiterbildung der Erfindung ist eine Verbindung zwischen dem Rohr im Zwischenabschnitt und dem Schaft im zweiten Abschnitt mittels Schweißen, mittels Löten, mittels Klemm- oder Pressverbindung, mittels Nietverbindung und/oder mittels Clinchverbindung ausgebildet.

In Weiterbildung der Erfindung hat der Schaft am Ende des ersten Abschnitts, das dem Zwischenabschnitt zugewandt ist, einen Durchmesser, der gleich groß ist wie oder geringfügig kleiner ist als ein Innendurchmesser des Rohres im Zwischenabschnitt.

Auf diese Weise kann das Rohr im Zwischenabschnitt auf das Ende des ersten Abschnitts aufgeschoben werden. Gegebenenfalls kann die Verbindung mittels seiner Presspassung erzielt werden. Beispielsweise kann das Rohr im erhitzten Zustand auf das Ende des ersten Abschnitts aufgeschoben werden. Nach dem Abkühlen des Rohres ist eine Presspassung zwischen dem ersten Abschnitt und dem Rohr des Zwischenabschnitts realisiert.

In Weiterbildung der Erfindung hat der Schaft am Ende des zweiten Abschnitt, das dem Zwischenabschnitt zugewandt ist, einen Durchmesser, der gleich groß oder geringfügig kleiner ist als ein Innendurchmesser des Rohres im Zwischenabschnitt.

Auf diese Weise kann das Rohr im Zwischenabschnitt in einfacher Weise auf das Ende des zweiten Abschnitts aufgeschoben oder aufgepresst werden. Beispielsweise kann das Rohr im erhitzten Zustand auf das Ende des zweiten Abschnitts aufgeschoben werden. Nach dem Abkühlen ist dann eine Presspassung zwischen dem Rohr und dem Ende des zweiten Abschnitts realisiert.

In Weiterbildung der Erfindung weist der Schaft im ersten Abschnitt eine umlaufende Schulter auf, an der eine erste Stirnseite des Rohres anliegt.

Beim Aufschieben des Rohres im Zwischenabschnitt auf das Ende des ersten Abschnitts ist dadurch ein Anschlag realisiert. Dadurch wird die Herstellung der erfindungsgemäßen Schraube wesentlich erleichtert.

In Weiterbildung der Erfindung weist der Schaft im zweiten Abschnitt eine umlaufende Schulter auf, an der eine zweite Stirnseite des Rohres anliegt.

Beim Aufschieben des Rohres im Zwischenabschnitt auf den zweiten Abschnitt ist dadurch ein Anschlag gebildet. Dadurch wird die Herstellung der Schraube vereinfacht. Ein Formschluss zwischen der Stirnseite des Rohres und der Schulter in Umfangsrichtung kann durch eine spezielle Gestaltung der Stirnseite des Rohres und/oder der umlaufenden Schulter realisiert werden.

In Weiterbildung der Erfindung bestehen der Kopf und der Schaft im ersten Abschnitt aus Stahl, insbesondere nicht rostendem Stahl beziehungsweise Edelstahl oder aus gehärtetem Kohlenstoffstahl.

In Weiterbildung der Erfindung besteht der Schaft im zweiten Abschnitt aus Stahl, insbesondere aus nicht rostendem Stahl beziehungsweise Edelstahl oder aus gehärtetem Kohlenstoffstahl.

In Weiterbildung der Erfindung besteht das Rohr aus Stahl, insbesondere nicht rostendem Stahl, beziehungsweise Edelstahl.

Edelstahl weist eine geringe Wärmeleitfähigkeit auf, so dass Wärmebrücken durch die erfindungsgemäße Schraube vermieden werden können. Indem der zweite Abschnitt aus gehärtetem Kohlenstoffstahl besteht, kann der zweite Abschnitt problemlos auch in zweite Werkstücke ohne vorgeschnittenes Gewinde, beispielsweise Blech- oder Stahlträger, eingeschraubt werden.

In Weiterbildung der Erfindung ist das erste Gewinde zumindest abschnittsweise als zweigängiges Gewinde ausgebildet.

Das erste Gewinde wird in das erste Werkstück eingeschraubt, das mittels der Schraube zum zweiten Werkstück im Abstand gehalten wird. Mittels eines zweigängigen Gewindes kann der Halt der Schraube im ersten Werkstück verbessert werden.

In Weiterbildung der Erfindung ist das erste Gewinde ausgehend vom Zwischenabschnitt zweigängig ausgebildet, wobei sich der zweigängig ausgebildete Bereich des ersten Gewindes bis zu maximal der Hälfte der Länge des ersten Abschnitts, insbesondere einem Drittel der Länge, erstreckt.

Bei einem Verfahren zum Herstellen einer erfindungsgemäßen Schraube ist das Verbinden des ersten Abschnitts des Schafts mit dem Rohr und das Verbinden des zweiten Abschnitts des Schafts mit dem Rohr vorgesehen.

Die erfindungsgemäße Schraube wird dadurch aus mindestens drei Teilen hergestellt, nämlich dem ersten Abschnitt, dem Rohr und dem zweiten Abschnitt. Dadurch können der erste Abschnitt, das Rohr und der zweite Abschnitt je nach Anwendungsfall aus unterschiedlichen Materialien hergestellt werden.

In Weiterbildung der Erfindung erfolgt das Verbinden des ersten Abschnitts des Schafts und/oder des zweiten Abschnitts des Schafts mit dem Rohr mittels Schweißen, mittels Löten, mittels Klemm- oder Pressverbindung, mittels Nietverbindung und/oder mittels Clinchverbindung.

Zusätzlich zu einer solchen Verbindung kann das Ende des Rohres, das mit dem ersten Abschnitt verbunden wird und/oder das Ende des Rohres, das mit dem zweiten Abschnitt verbunden wird, eine Gestaltung aufweisen, die mit einer passende Gestaltung des Endes des ersten Abschnitts und/oder des Endes des zweiten Abschnitts zusammenwirken kann, um einen Formschluss zwischen dem Rohr und dem ersten Abschnitt und/oder dem zweiten Abschnitt zu erzielen, insbesondere einen Formschluss in und entgegen einer Einschraubrichtung der Schraube. Beispielsweise kann das Ende des Rohres mit Ausnehmungen/Vorsprüngen versehen sein, die in passende Ausnehmungen/Vorsprünge des ersten Abschnitts und/oder des zweiten Abschnitts eingreifen. Ein Stoffschluss wird durch Schweißen und/oder Löten erzielt. Auch eine Nietverbindung und/oder eine Clinchverbindung können eine stabile Verbindung bereitstellen. Eine Klemm- oder Pressverbindung kann beispielsweise durch Aufschieben des Rohres im erhitzten Zustand auf den ersten und/oder den zweiten Abschnitt erfolgen, so dass nach dem Abkühlen eine Presspassung zwischen dem Rohr und dem ersten Abschnitt und/oder dem zweiten Abschnitt realisiert ist.

Die der Erfindung zugrunde liegende Aufgabe wird auch durch eine Anordnung mit einer erfindungsgemäßen Schraube, einem ersten Werkstück, insbesondere einer Unterkonstruktion für eine Fassadenbekleidung, und einem zweiten Werkstück, insbesondere einem Mauerwerk oder einer Tragstruktur eines Gebäudes, gelöst, wobei der Zwischenabschnitt zwischen dem ersten Werkstück und dem zweiten Werkstück angeordnet ist.

Das Rohr im Zwischenabschnitt weist eine gegenüber dem ersten Abschnitt und/oder dem zweiten Abschnitt sehr geringe Wärmeleitfähigkeit auf. Bei der erfindungsgemäßen Anordnung werden dadurch Wärmebrücken, die durch konventionelle Schrauben vorhanden sind, im Wesentlichen vollständig vermieden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht einer erfindungsgemäßen Schraube von schräg oben,
- Fig. 2: eine auseinandergezogene Darstellung der Einzelteile der Schraube der Fig. 1,
- Fig. 3: eine schematische Darstellung einer Anordnung mit der erfindungsgemäßen Schraube,
- Fig. 4: eine auseinandergezogene Darstellung der Schraube der Fig. 1 in einer Seitenansicht, und
- Fig. 5: eine vergrößerte abschnittsweise Darstellung der Schraube der Fig. 1.

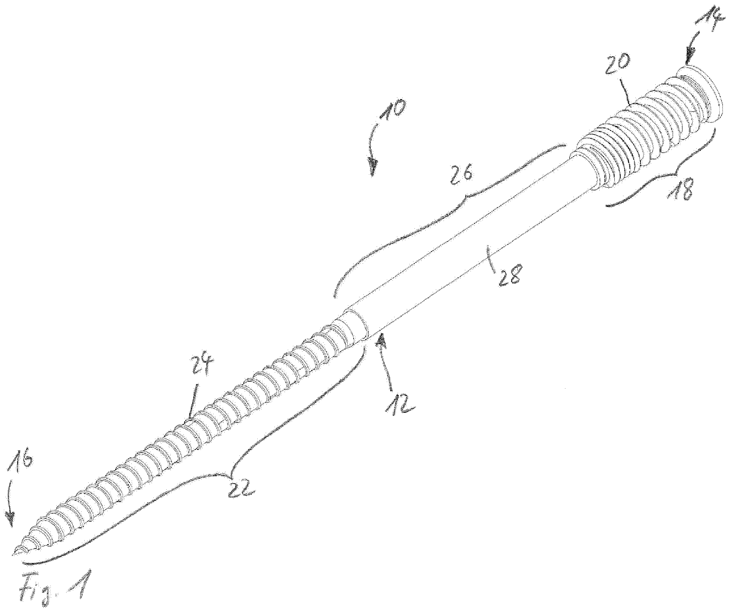

Fig. 1 zeigt eine erfindungsgemäße Schraube 10 gemäß einer bevorzugten Ausführungsform der Erfindung. Die Schraube 10 weist einen Schaft 12 und einen Kopf 14 mit einer in Fig. 1 nicht erkennbaren Antriebsausbildung auf. Der Schaft 12 weist an seinem, dem Kopf 14 gegenüberliegenden freien Ende 16 eine Schraubenspitze auf. In einem ersten Abschnitt 18 der Schraube, wobei sich dieser erste Abschnitt 18 unmittelbar an den Schraubenkopf 14 anschließt, ist ein erstes Gewinde 20 vorgesehen. Der erste Abschnitt 18 kann sich dabei bis zum Kopf 14 erstrecken oder auch den Kopf 14 mit einschließen. Die Schraube 10 weist einen zweiten Abschnitt 22 auf, in dem ein zweites Gewinde 24 vorgesehen ist, das sich bis zur Schraubenspitze 16 erstreckt. Im Bereich der Schraubenspitze 16 verjüngt sich der Schaft 12 zu einer echten Spitze. Im Rahmen der Erfindung kann die Schraubenspitze 16 auch in anderer Weise ausgebildet sein, beispielsweise abgerundet oder auch als Bohrspitze.

Die Schraube 10 weist einen Zwischenabschnitt 26 auf, der zwischen dem ersten Abschnitt 18 und dem zweiten Abschnitt 22 angeordnet ist und der den ersten Abschnitt 18 und den zweiten Abschnitt 22 verbindet. Bei der dargestellten Ausführungsform ist der Schaft dadurch mittels des ersten Abschnitts 18, des Zwischenabschnitts 26 und des zweiten Abschnitts 24 gebildet. Wie ausgeführt wurde, kann der Kopf 14 Teil des ersten Abschnitts 18 sein, wie dies bei der dargestellten Ausführungsform der Fall ist.

Bei der dargestellten Ausführungsform ist der erste Abschnitt 18 durch ein erstes Bauteil, das als massives Bauteil ausgebildet ist, gebildet. Der Zwischenabschnitt 26 ist durch ein Rohr gebildet. Der zweite Abschnitt 22 ist wiederum durch ein massives Bauteil gebildet.

Beim Herstellen der Schraube 10 werden der erste Abschnitt 18, der Zwischenabschnitt 26 und der zweite Abschnitt 22 miteinander verbunden, beispielsweise durch Schweißen, Löten, mittels Klemm- oder Pressverbindungen, mittels Nietverbindungen und/oder mittels Clinchverbindungen.

Bei Verwendung der Schraube 10 wird der zweite Abschnitt 22 in ein zweites Werkstück eingeschraubt, beispielsweise ein Mauerwerk. Der zweite Abschnitt 22 kann hierzu beispielsweise in einem Kunststoffdübel angeordnet werden, der im Mauerwerk platziert wird. Alternativ kann der zweite Abschnitt 22 auch unmittelbar in das zweite Werkstück eingeschraubt werden, beispielsweise dann, wenn das zweite Werkstück aus Holz oder Holzmaterial oder auch aus Beton ausgebildet ist.

Der erste Abschnitt 18 wird in ein erstes Werkstück eingeschraubt. Das erste Werkstück kann beispielsweise die Unterkonstruktion für eine Fassadenbekleidung bilden und beispielsweise als Holzkonstruktion, Aluminiumkonstruktion oder Stahlkonstruktion ausgebildet sein. Das Rohr 28 im Zwischenabschnitt 26 wird dann so angeordnet, dass es im Zwischenraum zwischen dem ersten Werkstück und dem zweiten Werkstück angeordnet ist. Dieser Zwischenraum wird üblicherweise mit einer Isolierung, beispielsweise Steinwolle, gefüllt. Aufgrund des gegenüber Vollmaterial kleineren Materialquerschnitts des Rohres 28 weist die Schraube 10 im Zwischenabschnitt 26 ein gegenüber dem ersten Abschnitt 18 und dem zweiten Abschnitt 22 deutlich größeren Wärmeleitwiderstand auf. Mit anderen Worten weist das Rohr 28 eine wesentlich geringere Wärmeleitfähigkeit auf als der erste Abschnitt 18 und der zweite Abschnitt 22. Dies kann beispielsweise noch dadurch verbessert werden, dass das Rohr 28 aus einem Material mit schlechter Wärmeleitfähigkeit hergestellt ist, beispielsweise nicht rostender Stahl oder Edelstahl. Im Zwischenabschnitt 26 muss die Schraube 10 lediglich Kräfte zwischen dem ersten Abschnitt 18 und dem zweiten Abschnitt 22 beziehungsweise umgekehrt übertragen. Im Zwischenabschnitt 26 müssen aber keine Kräfte auf das erste Werkstück und/oder das zweite Werkstück übertragen werden. Überraschenderweise ist es dadurch möglich, den Zwischenabschnitt 26 aus einem Rohr herzustellen, da im Zwischenabschnitt 26 kein Gewinde angeordnet werden muss.

Mit der erfindungsgemäßen Schraube lassen sich dadurch bei der Anordnung eines ersten Werkstücks im Abstand von einem zweiten Werkstück Wärmebrücken zwischen dem ersten Werkstück und dem zweiten Werkstück annähernd vollständig vermeiden.

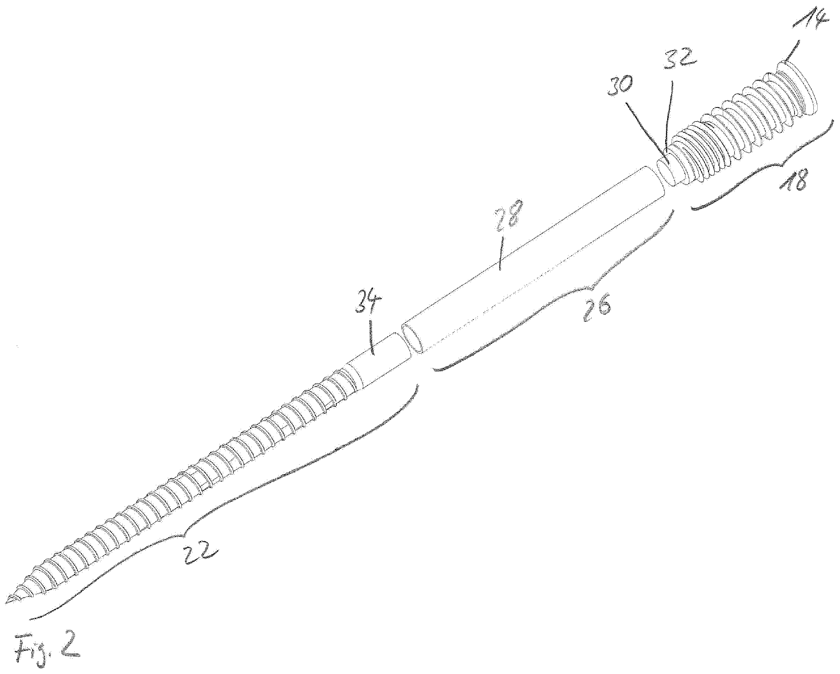

Fig. 2 zeigt eine auseinandergezogene Darstellung der Bauteile der Schraube 10 der Fig. 1. Der erste Abschnitt 18 mit dem Kopf 14 besteht, wie ausgeführt wurde, aus Vollmaterial. Der Zwischenabschnitt 26 ist mittels des Rohres 28 gebildet, das bei der dargestellten Ausführungsform eine konstante Wandstärke aufweist, die maximal 20%, insbesondere zwischen 5% und 15%, insbesondere 10%, des Durchmessers des Rohres 28 beträgt. Der zweite Abschnitt 22 besteht wiederum aus Vollmaterial.

Der erste Abschnitt 18 weist an seinem, dem Kopf 14 gegenüberliegenden Ende einen gewindefreien, zapfenförmigen Abschnitt 30 auf. Am Ende des zapfenförmigen Abschnitts 30, in Richtung auf den Kopf 14 gesehen, ist eine umlaufende Schulter 32 ausgebildet. Der Durchmesser des Zapfens 30 ist gleich groß wie oder geringfügig kleiner als der Innendurchmesser des Rohres 28. Beim Herstellen der Schraube 10 wird das Rohr 28 auf den Zapfen 30 aufgeschoben, bis eine in Fig. 2 rechte Stirnseite des Rohres 28 an der umlaufenden Schulter 32 anschlägt. In diesem Zustand kann dann eine Verbindung des Rohres 28 mit dem ersten Abschnitt 18 erfolgen. Eine solche Verbindung kann beispielsweise mittels Presspassung erfolgen, mittels Löten, mittels Schweißen, mittels Nietverbindung und/oder mittels Clinchverbindung. Unabhängig davon, ob eine stoffschlüssige und/oder formschlüssige Verbindung des Rohres 28 mit dem Zapfen 30 und damit dem ersten Abschnitt 18 erfolgt, muss die Verbindung so ausgebildet sein, dass Drehmomente beim Eindrehen und Ausdrehen der Schraube übertragen werden können und dass auch sonstige mechanische Kräfte, die zwischen dem ersten Werkstück und dem zweiten Werkstück auftreten können, sicher vom ersten Abschnitt 18 auf das Rohr 28 übertragen werden können.

Das in Fig. 2 linke Ende des Rohres 28 wird auf einen Zapfen 34 des zweiten Abschnitts 22 aufgeschoben. Der Zapfen 34 weist hierzu einen Durchmesser auf, der gleich groß ist wie oder geringfügig kleiner ist als ein Innendurchmesser des Rohres 28. Nach dem Aufschieben des in Fig. 2 linken Endes des Rohres 28 auf den Zapfen 34 kann das Rohr 28 mit dem zweiten Abschnitt 22 verbunden werden, beispielsweise mittels Schweißen, mittels Löten, mittels Klemm- oder Pressverbindung, mittels Nietverbindung und/oder mittels Clinchverbindung.

Beispielsweise können die Außendurchmesser der Zapfen 30, 34 im kalten Zustand gleich groß oder geringfügig kleiner sein als ein Innendurchmesser des Rohres 28 im erhitzten Zustand. Das Rohr 28 wird dann im erhitzten Zustand auf die Zapfen 30, 34 aufgeschoben. Nach dem Abkühlen des Rohres 28 ist dann eine Presspassung zwischen dem Rohr 28 und dem Zapfen 30 einerseits und dem Zapfen 34 andererseits realisiert.

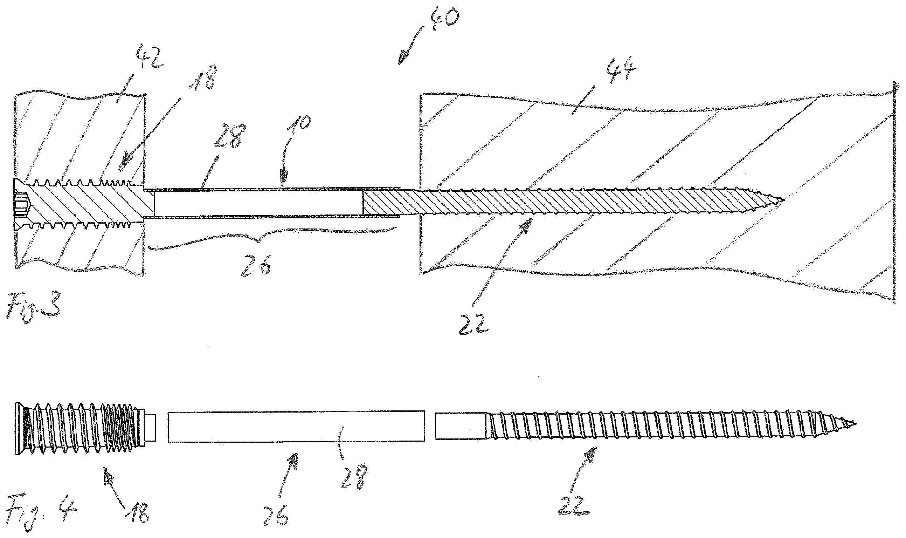

Fig. 3 zeigt eine schematische Schnittansicht einer erfindungsgemäßen Anordnung 40. Die Anordnung 40 weist die Schraube 10, ein erstes Werkstück 42 und ein zweites Werkstück 44 auf. Das erste Werkstück 42 ist beispielsweise eine Unterkonstruktion für eine Fassadenbekleidung. Das erste Werkstück 42 kann beispielsweise aus Holz, aus Aluminium oder auch aus Stahl bestehen. Das zweite Werkstück 44 kann beispielsweise eine Gebäudewand bilden und beispielsweise aus Mauerwerk, Holz, Beton oder auch Metall bestehen.

Bei der erfindungsgemäßen Anordnung 40 wird das erste Werkstück 42 im Abstand zu dem zweiten Werkstück 44 gehalten. Die Schraube 10 ist so ausgebildet und insbesondere ist die Länge des Zwischenabschnitts 26 der Schraube so bemessen, dass der Zwischenabschnitt 26 im Zwischenraum zwischen dem ersten Werkstück 42 und dem zweiten Werkstück 44 angeordnet ist. In der Schnittansicht der Fig. 3 ist zu erkennen, dass im Zwischenabschnitt 26, soweit dieser ausschließlich durch das Rohr 28 gebildet ist, ein Materialquerschnitt der Schraube 10 wesentlich kleiner ist als im Bereich des ersten Abschnitts 18 und im Bereich des zweiten Abschnitts 22. Das Rohr 28 verhindert durch seinen kleinen Materialquerschnitt und die dadurch sich ergebende geringe Wärmeleitfähigkeit dadurch das Entstehen von Wärmebrücken zwischen dem ersten Bauteil 42 und dem zweiten Bauteil 44. Das Rohr 28 kann beispielsweise aus einem Material mit kleiner Wärmeleitfähigkeit bestehen, beispielsweise aus Edelstahl, um einen Wärmeübergang zwischen dem ersten Werkstück 42 und dem zweiten Werkstück 44 und umgekehrt weitgehend zu minimieren.

Fig. 4 zeigt die auseinandergezogene Darstellung der Schraube der Fig. 2 mit dem ersten Abschnitt 18, dem zweiten Abschnitt 26, der durch das Rohr 28 gebildet ist, und dem zweiten Abschnitt 22.

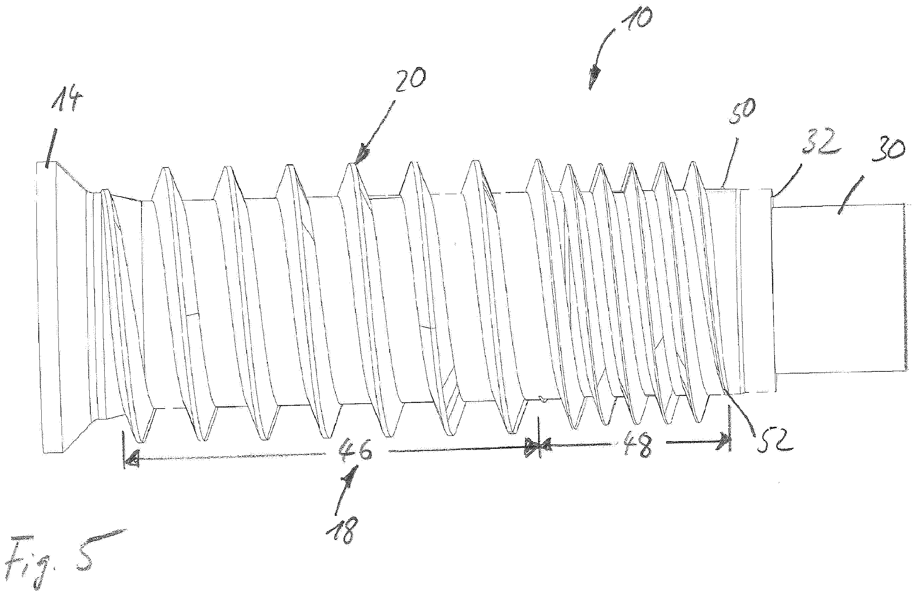

Fig. 5 zeigt eine vergrößerte Einzelheit der Schraube 10, wobei lediglich der erste Abschnitt 18 dargestellt ist. Neben dem Kopf 14, dem Zapfen 30 und der umlaufenden Schulter 32, vgl. Fig. 2, ist die Ausbildung des ersten Gewindes 20 im ersten Abschnitt 18 gut zu erkennen. Das erste Gewinde 20 beginnt unmittelbar unterhalb des Kopfes 14, wobei sich eine Flankenhöhe von einem Wert von null unmittelbar unterhalb des Kopfes 14, in Fig. 5 also unmittelbar rechts des Kopfes 14, im Verlauf der Hälfte des Umfangs bis auf einen Endwert erhöht. Die Unterseite des Kopfes 14 ist kegelstumpfförmig ausgebildet.

Das erste Gewinde 20 verläuft dann mit konstanter Flankenhöhe bis zum Ende eines ersten Bereichs 46. Vom Ende des ersten Bereichs 46 bis zum Ende eines zweiten Bereichs 48 ist das erste Gewinde 20 dann als zweigängiges Gewinde ausgebildet. Die Flankenhöhe im zweiten Bereich 48 ist dadurch etwas reduziert. Dies ergibt sich bei der Herstellung des ersten Gewindes 20 im zweiten Bereich 48, da nicht nur der erste Gewindegang, sondern auch der zweite Gewindegang mit Material des Rohlings in diesem zweiten Bereich 48 hergestellt werden muss. Der zweite Gewindegang beginnt an dem dem Kopf 14 zugewandten Ende des Bereichs 48, in Fig. 5 also am linken Ende, mit einer Flankenhöhe von null, wobei die Flankenhöhe dann im Verlauf der Hälfte des Umfangs auf eine endgültige Flankenhöhe ansteigt, die, wie ausgeführt wurde, geringfügig kleiner ist als die Flankenhöhe im ersten Bereich 46. An dem dem Kopf 14 abgewandten Ende des zweiten Bereichs 48, in Fig. 5 also rechts, verringern sich sowohl die Höhe des ersten Gewindegangs als auch die Höhe des zweiten Gewindegangs im Verlauf der Hälfte des Umfangs oder im Laufe eines halben Umlaufs des Gewindegangs wieder auf null. Das Ende des ersten Gewindegangs 50 ist in Fig. 5 noch ansatzweise zu erkennen, wohingegen das Ende des zweiten Gewindegangs 52 in Fig. 5 deutlicher zu erkennen ist.

## Patentansprüche

1. Schraube (10) zur Befestigung eines ersten Werkstücks (42) an einem zweiten Werkstück (44), wobei mittels der Schraube (10) das erste Werkstück (42) im Abstand zu dem zweiten Werkstück (44) gehalten werden kann, mit einem Schaft (12), einem Kopf (14) mit einer Antriebsausbildung, einem ersten Gewinde (20) im Bereich des Kopfs (14) und/oder in einem unmittelbar an eine Unterseite des Kopfs (14) anschließenden ersten Abschnitt (18) des Schafts (12), einem zweiten Gewinde (24), wobei das zweite Gewinde (24) in einem von einem freien Ende des Schafts (12) ausgehenden zweiten Abschnitt (22) des Schafts (12) angeordnet ist, und einem Zwischenabschnitt (26) zwischen dem ersten Abschnitt (18) und dem zweiten Abschnitt (22) des Schafts (12), **dadurch gekennzeichnet, dass** der erste Abschnitt (18) und der zweite Abschnitt (22) aus Vollmaterial bestehen und der Zwischenabschnitt (26) mittels eines Rohres (28) gebildet ist.

2. Schraube nach Anspruch 1, **dadurch gekennzeichnet, dass** eine Wandstärke des Rohres (28) maximal 20%, insbesondere zwischen 5% und 15%, insbesondere 10%, des Durchmessers des Rohres (28) beträgt.

3. Schraube nach Anspruch 1 oder 2, **dadurch gekennzeichnet, dass** eine Verbindung zwischen dem Rohr (28) im Zwischenabschnitt (26) und dem Schaft (12) im ersten Abschnitt (18) mittels Schweißen, mittels Löten, mittels Klemm- oder Pressverbindung, mittels Nietverbindung und/oder mittels Clinchverbindung ausgebildet ist.

4. Schraube nach wenigstens einem der vorstehenden Ansprüche, **dadurch gekennzeichnet, dass** eine Verbindung zwischen dem Rohr (28) im Zwischenabschnitt (26) und dem Schaft (12) im zweiten Abschnitt (22) mittels Schweißen, mittels Löten, mittels Klemm- oder Pressverbindung, mittels Nietverbindung und/oder mittels Clinchverbindung ausgebildet ist.

5. Schraube nach Anspruch 3 und/oder Anspruch 4, **dadurch gekennzeichnet, dass** eine Verbindung zwischen dem Rohr (28) im Zwischenabschnitt (26) und dem Schaft (12) im ersten Abschnitt (18) und/oder dem Schaft (12) im zweiten Abschnitt (22) mittels einer Klemm- oder Pressverbindung ausgebildet ist, wobei die Klemm- oder Pressverbindung in und entgegen einer vorgesehenen Einschraubrichtung der Schraube (10) einen Formschluss zwischen dem Rohr (28) im Zwischenabschnitt (26) und dem ersten Abschnitt (18) beziehungsweise dem zweiten Abschnitt (22) des Schafts (12) ausbildet.

6. Schraube nach wenigstens einem der vorstehenden Ansprüche, **dadurch gekennzeichnet, dass** der Schaft (12) am Ende des ersten Abschnitts (18), das dem Zwischenabschnitt (26) zugewandt ist, einen Durchmesser hat, der gleich groß ist wie oder geringfügig kleiner ist als ein Innendurchmesser des Rohres (28) im Zwischenabschnitt (26).

7. Schraube nach wenigstens einem der vorstehenden Ansprüche, **dadurch gekennzeichnet, dass** der Schaft (12) am Ende des zweiten Abschnitts (22), das dem Zwischenabschnitt (26) zugewandt ist, einen Durchmesser hat, der gleich groß ist wie oder geringfügig kleiner ist als ein Innendurchmesser des Rohres (28) im Zwischenabschnitt (26).

8. Schraube nach wenigstens einem der vorstehenden Ansprüche, **dadurch gekennzeichnet, dass** der Schaft (12) im ersten Abschnitt (18) eine umlaufende Schulter (32) aufweist, an der eine erste Stirnseite des Rohres (28) anliegt.

9. Schraube nach wenigstens einem der vorstehenden Ansprüche, **dadurch gekennzeichnet, dass** der Schaft im zweiten Abschnitt eine umlaufende Schulter aufweist, an der eine zweite Stirnseite des Rohres anliegt.

10. Schraube nach wenigstens einem der vorstehenden Ansprüche, **dadurch gekennzeichnet, dass** der Kopf (14) und der Schaft (12) im ersten Abschnitt (18) aus Stahl, insbesondere nicht rostendem Stahl beziehungsweise Edelstahl oder aus gehärtetem Kohlenstoffstahl, bestehen.

11. Schraube nach wenigstens einem der vorstehenden Ansprüche, **dadurch gekennzeichnet, dass** der Schaft (12) im zweiten Abschnitt (22) aus Stahl, insbesondere nicht rostendem Stahl beziehungsweise Edelstahl oder aus gehärtetem Kohlenstoffstahl, besteht.

12. Schraube nach wenigstens einem der vorstehenden Ansprüche, **dadurch gekennzeichnet, dass** das Rohr (28) aus Stahl, insbesondere nicht rostendem Stahl beziehungsweise Edelstahl, besteht.

13. Schraube nach wenigstens einem der vorstehenden Ansprüche, **dadurch gekennzeichnet, dass** das erste Gewinde (20) zumindest abschnittsweise als zweigängiges Gewinde ausgebildet ist, insbesondere **dadurch gekennzeichnet, dass** das erste Gewinde (20) ausgehend vom Zwischenabschnitt (26) zweigängig ausgebildet ist, wobei sich der zweigängig ausgebildete Bereich des ersten Gewindes (20) bis zu maximal der Hälfte der Länge des ersten Abschnitts (18), insbesondere bis zu einem Drittel der Länge, erstreckt.

14. Verfahren zum Herstellen einer Schraube (10) nach wenigstens einem der vorstehenden Ansprüche, **gekennzeichnet durch** Verbinden des ersten Abschnitts (18) des Schafts (12) mit dem Rohr (28) und Verbinden des zweiten Abschnitts (22) des Schafts (12) mit dem Rohr (28), insbesondere **gekennzeichnet durch** Verbinden des ersten Abschnitts (18) des Schafts (12) und/oder des zweiten Abschnitts (22) des Schafts (12) mit dem Rohr (28) mittels Schweißen, mittels Löten, mittels Klemm- oder Pressverbindung, mittels Nietverbindung und/oder mittels Clinchverbindung.

15. Anordnung mit einer Schraube (10) nach wenigstens einem der vorstehenden Ansprüche 1 bis 13, mit einem ersten Werkstück (42), insbesondere eine Unterkonstruktion für eine Fassadenbekleidung, und einem zweiten Werkstück (44), insbesondere ein Mauerwerk oder eine Tragstruktur eines Gebäudes, wobei der Zwischenabschnitt (26) zwischen dem ersten Werkstück (42) und dem zweiten Werkstück (44) angeordnet ist.

## Claims

1. Screw (10) for fastening a first workpiece (42) to a second workpiece (44), wherein the first workpiece (42) can be held at a distance from the second workpiece (44) by means of the screw (10), having a shank (12), having a head (14) with a driving formation, having a first thread (20) in the region of the head (14) and/or in a first portion (18) of the shank (12), which first portion directly adjoins a bottom side of the head (14), having a second thread (24), wherein the second thread (24) is arranged in a second portion (22) of the shank (12), which second portion proceeds from a free end of the shank (12), and having an intermediate portion (26) between the first portion (18) and the second portion (22) of the shank (12), **characterized in that** the first portion (18) and the second portion (22) consist of solid material and the intermediate portion (26) is formed by means of a tube (28).

2. Screw according to Claim 1, **characterized in that** a wall thickness of the tube (28) is at most 20%, in particular between 5% and 15%, in particular 10%, of the diameter of the tube (28).

3. Screw according to Claim 1 or 2, **characterized in that** a connection between the tube (28) in the intermediate portion (26) and the shank (12) in the first portion (18) is formed by means of welding, by means of soldering, by means of a clamping or pressing connection, by means of a riveted connection and/or by means of a clinching connection.

4. Screw according to at least one of the preceding claims, **characterized in that** a connection between the tube (28) in the intermediate portion (26) and the shank (12) in the second portion (22) is formed by means of welding, by means of soldering, by means of a clamping or pressing connection, by means of a riveted connection and/or by means of a clinching connection.

5. Screw according to Claim 3 and/or Claim 4, **characterized in that** a connection between the tube (28) in the intermediate portion (26) and the shank (12) in the first portion (18) and/or the shank (12) in the second portion (22) is formed by means of a clamping or pressing connection, wherein the clamping or pressing connection forms in and counter to an intended screw-in direction of the screw (10) a form fit between the tube (28) in the intermediate portion (26) and the first portion (18) or the second portion (22) of the shank (12).

6. Screw according to at least one of the preceding claims, **characterized in that**, at that end of the first portion (18) which is closest to the intermediate portion (26), the shank (12) has a diameter which is equal to or slightly smaller than an inner diameter of the tube (28) in the intermediate portion (26).

7. Screw according to at least one of the preceding claims, **characterized in that**, at that end of the second portion (22) which is closest to the intermediate portion (26), the shank (12) has a diameter which is equal to or slightly smaller than an inner diameter of the tube (28) in the intermediate portion (26).

8. Screw according to at least one of the preceding claims, **characterized in that**, in the first portion (18), the shank (12) has a circumferential shoulder (32) against which a first end face of the tube (28) abuts.

9. Screw according to at least one of the preceding claims, **characterized in that**, in the second portion, the shank has a circumferential shoulder against which a second end face of the tube abuts.

10. Screw according to at least one of the preceding claims, **characterized in that** the head (14) and the shank (12), in the first portion (18), consist of steel, in particular of rust-resistant steel or high-grade steel or of hardened carbon steel.

11. Screw according to at least one of the preceding claims, **characterized in that** the shank (12), in the second portion (22), consists of steel, in particular of rust-resistant steel or high-grade steel or of hardened carbon steel.

12. Screw according to at least one of the preceding claims, **characterized in that** the tube (28) consists of steel, in particular rust-resistant steel or high-grade steel.

13. Screw according to at least one of the preceding claims, **characterized in that** the first thread (20) is formed at least sectionally as a two-start thread, in particular **characterized in that**, proceeding from the intermediate portion (26), the first thread (20) is formed as a two-start thread, wherein the two-start-thread region of the first thread (20) extends as far as at most half of the length of the first portion (18), in particular as far as one third of the length.

14. Method for producing a screw (10) according to at least one of the preceding claims, **characterized by** connecting the first portion (18) of the shank (12) to the tube (28) and connecting the second portion (22) of the shank (12) to the tube (28), in particular **characterized by** connecting the first portion (18) of the shank (12) and/or the second portion (22) of the shank (12) to the tube (28) by means of welding, by means of soldering, by means of a clamping or pressing connection, by means of a riveted connection and/or by means of a clinching connection.

15. Arrangement having a screw (10) according to at least one of preceding Claims 1 to 13, having a first workpiece (42), in particular a substructure for a facade cladding, and having a second workpiece (44), in particular a masonry construction or a supporting structure of a building, wherein the intermediate portion (26) is arranged between the first workpiece (42) and the second workpiece (44).

## Revendications

1. Vis (10) pour la fixation d'une première pièce (42) sur une deuxième pièce (44), la première pièce (42) pouvant être maintenue à distance de la deuxième pièce (44) au moyen de la vis (10), avec une tige (12), une tête (14) avec une configuration d'entraînement, un premier filetage (20) dans la zone de la tête (14) et/ou dans une première section (18) de la tige (12) se raccordant directement à un côté inférieur de la tête (14), un deuxième filetage (24), le deuxième filetage (24) étant agencé dans une deuxième section (22) de la tige (12) partant d'une extrémité libre de la tige (12), et une section intermédiaire (26) entre la première section (18) et la deuxième section (22) de la tige (12), **caractérisée en ce que** la première section (18) et la deuxième section (22) sont constituées de matériau plein et la section intermédiaire (26) est formée au moyen d'un tube (28).

2. Vis selon la revendication 1, **caractérisée en ce qu'**une épaisseur de paroi du tube (28) est au maximum de 20 %, notamment entre 5 % et 15 %, notamment 10 %, du diamètre du tube (28).

3. Vis selon la revendication 1 ou 2, **caractérisée en ce qu'**une liaison entre le tube (28) dans la section intermédiaire (26) et la tige (12) dans la première section (18) est réalisée par soudage, par brasage, par liaison par serrage ou par pression, par liaison par rivetage et/ou par liaison par clinchage.

4. Vis selon au moins l'une quelconque des revendication précédentes, **caractérisée en ce qu'**une liaison entre le tube (28) dans la section intermédiaire (26) et la tige (12) dans la deuxième section (22) est réalisée par soudage, par brasage, par liaison par serrage ou par pression, par liaison par rivetage et/ou par liaison par clinchage.

5. Vis selon la revendication 3 et/ou la revendication 4, **caractérisée en ce qu'**une liaison entre le tube (28) dans la section intermédiaire (26) et la tige (12) dans la première section (18) et/ou la tige (12) dans la deuxième section (22) est réalisée au moyen d'une liaison par serrage ou par pression, la liaison par serrage ou par pression réalisant, dans et à l'encontre d'une direction de vissage prévue de la vis (10), une liaison par complémentarité de forme entre le tube (28) dans la section intermédiaire (26) et la première section (18) ou la deuxième section (22) de la tige (12).

6. Vis selon au moins l'une quelconque des revendications précédentes, **caractérisée en ce que** la tige (12) à l'extrémité de la première section (18) faisant face à la section intermédiaire (26) a un diamètre égal ou légèrement inférieur à un diamètre intérieur du tube (28) dans la section intermédiaire (26).

7. Vis selon au moins l'une quelconque des revendications précédentes, **caractérisée en ce que** la tige (12) à l'extrémité de la deuxième section (22) faisant face à la section intermédiaire (26) a un diamètre égal ou légèrement inférieur à un diamètre intérieur du tube (28) dans la section intermédiaire (26).

8. Vis selon au moins l'une quelconque des revendications précédentes, **caractérisée en ce que** la tige (12) présente dans la première section (18) un épaulement périphérique (32) contre lequel s'appuie un premier côté frontal du tube (28).

9. Vis selon au moins l'une quelconque des revendications précédentes, **caractérisée en ce que** la tige présente dans la deuxième section un épaulement périphérique contre lequel s'appuie un deuxième côté frontal du tube.

10. Vis selon au moins l'une quelconque des revendications précédentes, **caractérisée en ce que** la tête (14) et la tige (12) dans la première section (18) sont constituées d'acier, notamment d'acier résistant à la corrosion ou d'acier inoxydable ou d'acier au carbone trempé.

11. Vis selon au moins l'une quelconque des revendications précédentes, **caractérisée en ce que** la tige (12) dans la deuxième section (22) est constituée d'acier, notamment d'acier résistant à la corrosion ou d'acier inoxydable ou d'acier au carbone trempé.

12. Vis selon au moins l'une quelconque des revendications précédentes, **caractérisée en ce que** le tube (28) est constitué d'acier, notamment d'acier résistant à la corrosion ou d'acier inoxydable.

13. Vis selon au moins l'une quelconque des revendications précédentes, **caractérisée en ce que** le premier filetage (20) est réalisé au moins par sections sous la forme d'un filetage à deux filets, notamment **caractérisée en ce que** le premier filetage (20) est réalisé à deux filets à partir de la section intermédiaire (26), la zone du premier filetage (20) réalisée à deux filets s'étendant au maximum jusqu'à la moitié de la longueur de la première section (18), notamment jusqu'à un tiers de la longueur.

14. Procédé de fabrication d'une vis (10) selon au moins l'une quelconque des revendications précédentes, **caractérisé par** la liaison de la première section (18) de la tige (12) avec le tube (28) et la liaison de la deuxième section (22) de la tige (12) avec le tube (28), caractérisé notamment par la liaison de la première section (18) de la tige (12) et/ou de la deuxième section (22) de la tige (12) avec le tube (28) par soudage, par brasage, par liaison par serrage ou par pression, par liaison par rivetage et/ou par liaison par clinchage.

15. Agencement avec une vis (10) selon au moins l'une quelconque des revendications 1 à 13 précédentes, avec une première pièce (42), notamment une ossature pour un bardage de façade, et une deuxième pièce (44), notamment une maçonnerie ou une structure porteuse d'un bâtiment, la section intermédiaire (26) étant agencée entre la première pièce (42) et la deuxième pièce (44).
